# EUROPEAN PATENT APPLICATION

(11) **EP 1 484 176 A1**
(43) Date of publication of application: **08.12.2004**
(21) Application number: 04253261.4
(22) Date of filing: 02.06.2004
(51) Int. Cl.: B32B 27/30, B32B 27/20, B65D 65/40

(54) **PVDC film with nanocomposite tie layer**

(30) Priority: 02.06.2003 US 452892
(71) Applicant: Cryovac, Inc., Duncan, S.C. 29334 (US)
(72) Inventor: Grah, Michael D., Greenville, SC 29615 (US); Ahlgren, Kelly R., Greenville, SC 29615 (US)
(74) Representative: Duckworth, Timothy John

(57) **Abstract**

A film comprises first, second, and third layers. The first layer comprises vinylidene chloride polymer. The second layer comprises a dispersion of tie polymer and nanoparticles. The third layer comprises thermoplastic polymer. The second layer is between and directly adhered to both the first and third layers. The film provides an enhanced interlayer bond strength between the layers at the elevated temperatures associated with cook-in, retort, and/or pasteurization thermoprocessing. A packaged object comprising the film and method of processing a packaged food product are also provided.

## Description

### BACKGROUND OF THE INVENTION

The present invention relates to packaging films, and more particularly to packaging films useful for cook-in and retortable packaging.

In a typical cook-in process, an uncooked food product may be heat sealed within a bag formed from a thermoplastic film (i.e., a "cook-in film"). The cook-in bag is immersed in (i.e., exposed to) hot water or a steam-heated environment for a period of time to cook the packaged food product to the desired level while the food product is packaged in the bag. During cooking, the cook-in film is also subjected to abuse, for example rubbing against the walls of a metal container that holds the hot water in which the cook-in bag is immersed.

Cook-in time and temperature conditions typically involve a long, slow cook -- for example, submersion in water at a temperature of at least about 55°C or at least about 70°C (e.g., from about 55°C to about 65°C, from about 70° to about 80° C, and from about 70°C to about 100°C) for at least about 1 hour and up to about 12 hours (e.g., from about 1 to about 4 hours and from about 4 to about 6 hours). Cook-in films may also be heat shrinkable so that the heat exposure step shrinks the cook-in bag tightly about the food product. Examples of cook-in bag and film constructions are disclosed, for example, in U.S. Patent 4,469,742 issued September 4, 1984 to Oberle entitled "Pasteurizable, Cook-In Shrink Film," which is incorporated herein in its entirety by reference.

Retorting is a process in which a packaged food is subjected to an elevated temperature for an extended time, so that the exposure time at the elevated temperature for the coldest part of the packaged food is sufficient and effective to kill or significantly reduce the population of certain undesired microorganisms and thereby extend the shelf life of the packaged food. Examples of retort temperature include at least about 240°F (115°C), at least about 120°C, at least about 250°F (121°C), and at most about 260°F (127°C), at most about 130°C, and at most about 150°C. Examples of retort time include at least about 10 minutes, from about 10 to about 60 minutes, from about 40 to about 100 minutes, at least about 60 minutes, and from about 45 to about 90 minutes.

For retort heating, the packaged food may be placed in a retort chamber under heated water at any of the previous temperatures with an overriding, superimposed elevated air pressure (e.g., at least about 1.5 atms, at least about 2 atms, at most about 4 atmospheres, and at most about 5 atmospheres, all pressures absolute), or the package may be exposed to a steam-air mixture or pressurized steam. The thermoprocessing conditions (e.g., time, temperature, and pressure) may vary depending on the type and amount of food to be retorted.

Pasteurization may also be used to kill or significantly reduce the bacterial load that may contaminate a food product. Pasteurization typically involves thermoprocessing conditions that are of a lower temperature and shorter duration than retorting. Pasteurization may heat treat a packaged food by submersion in hot water (e.g., 71°C to 96°C) for from about 30 seconds to about 10 minutes, or for up to about one hour. See, for example, U.S. Statutory Invention Registration H762 to DeMasi entitled "Post-Pasteurization," which is incorporated herein in its entirety by reference.

Useful cook-in, retortable, and pasteurization films retain the integrity of the heat seal formed with the film, resist delamination, and maintain acceptable optical properties (e.g., gloss, low haze, and clarity) during and after exposure to cook-in, retort, or pasteurization conditions.

Useful films may also provide gas (e.g., oxygen) barrier attributes to help reduce the rate of spoilage of the packaged food. To that end, a film may incorporate a barrier layer comprising a resin that significantly reduces the oxygen transmission of the film. One such barrier resin is ethylene/vinyl alcohol copolymer (EVOH). However, after the film has been exposed to water (i.e., while the film moisture content is high), the oxygen transmission rate of EVOH may significantly increase and the mechanical properties of the EVOH portion of the film may otherwise degrade, for example, by an increase in porosity caused by steam or water foaming the EVOH layer. Exposure to water is typical in cook-in and retort conditions, as described above.

The oxygen transmission rate of vinylidene chloride polymer (PVdC) barrier resin is relatively unaffected by the water moisture level in the film. However, upon exposure to cook-in, retort, or pasteurization thermoprocessing conditions, the PVdC barrier layer -- and/or existing tie layers used to adhere the PVdC layer to the remainder of the film - may tend to delaminate, typically in the heat sealed regions, and especially in view of the abuse to which the package may be subjected during and after the thermoprocessing. The seal delamination failure may also occur during "rethermalization" of a retort package; for example, when a previously retorted package is reheated under ambient atmospheric pressure, the volume and pressure inside the retort package may increase to place additional stress on the heat seals.

### SUMMARY OF THE INVENTION

The present invention addresses one or more of the aforementioned problems.

A film comprises first, second, and third layers. The first layer comprises at least about 50 weight % vinylidene chloride polymer. The second layer comprises: i) at least about 50 weight % of one or more tie polymers selected from ethylene/vinyl acetate copolymer, ethylene/(meth)acrylic acid copolymer, ethylene/C₁-C₁₂ alkyl (meth)acrylate copolymer, and anhydride-modified polyolefin; and ii) at least about 0.5 weight % of nanoparticles dispersed in the one or more tie polymers of the second layer, the nanoparticles having an average size of less than about 100 nm in at least one dimension. The third layer comprises one or more thermoplastic polymers. The second layer is between and directly adhered to both the first and third layers.

The second layer comprising a dispersion of nanoparticles in the tie polymer provides an enhanced interlayer bond strength between the PVdC-containing first layer and the second "tie" layer and also between the second "tie" layer and the third layer, in particular at the elevated temperatures associated with cook-in, retort, and/or pasteurization thermoprocessing. The PVdC-containing film also provides an enhanced film seal strength during and after exposure to the thermoprocessing conditions of cook-in, retort, and/or pasteurization.

These and other objects, advantages, and features of the invention will be more readily understood and appreciated by reference to the detailed description of the invention and the drawings.

### BRIEF DESCRIPTION OF THE DRAWINGS

Fig. 1 is a schematic cross-section of a three-layer film of the present invention;
Fig. 2 is a schematic cross-section of an alternative four-or-more layer film of the present invention;
Fig. 3 is a schematic cross-section of another alternative four-or-more layer film of the present invention; and
Fig. 4 is a schematic cross-section of an alternative five-or-more layer film of the present invention.

### DETAILED DESCRIPTION OF THE INVENTION

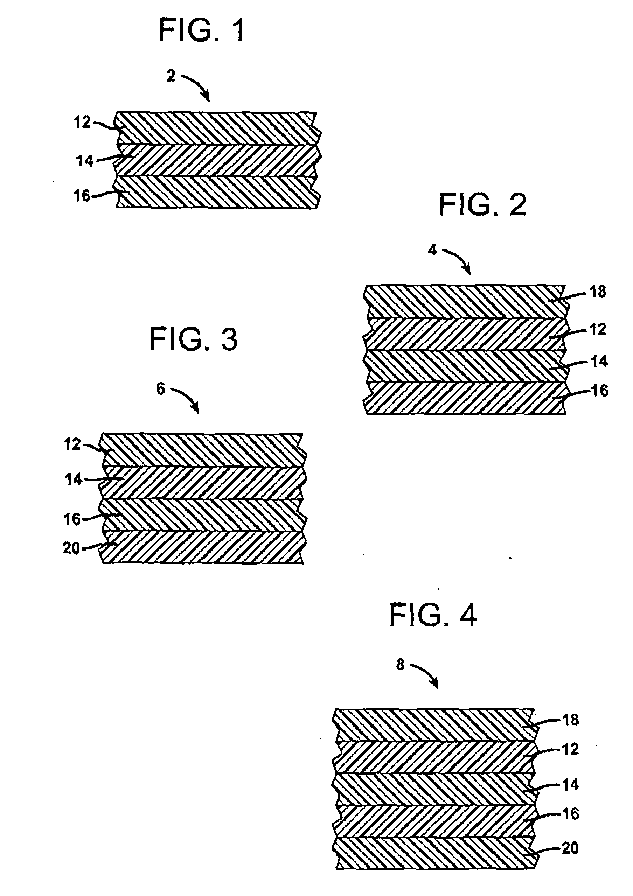

The films 2, 4, 6, 8 of the present invention each comprise first, second, and third layers. (Figs. 1-4.) The first layer 12 comprises polyvinylidene chloride copolymer. The second layer 14 comprises tie polymer and nanoparticles. The second layer 14 is between and directly adhered to both of the first layer 12 and the third layer 16. The film may comprise additional layers 18 and 20. (Figs. 2-4.)

### First Layer

The first layer 12 of the film comprises vinylidene chloride polymer ("PVdC"). "Vinylidene chloride polymer" or "PVdC" refers to a vinylidene chloride-containing polymer or copolymer -- that is, a polymer that includes monomer units derived from vinylidene chloride (CH₂ = CCl₂) and also, optionally, monomer units derived from one or more of vinyl chloride, styrene, vinyl acetate, acrylonitrile, and C₁-C₁₂ alkyl esters of (meth)acrylic acid (e.g., methyl acrylate, butyl acrylate, methyl methacrylate). As used herein, "(meth)acrylic acid" refers to both acrylic acid and/or methacrylic acid; and "(meth)acrylate" refers to both acrylate and methacrylate. Also as used herein, "copolymer" means a polymer derived from two or more types of monomers, and includes terpolymers, etc.

Examples of PVdC may include one or more of the following: vinylidene chloride homopolymer, vinylidene chloride/vinyl chloride copolymer ("VDC/VC"), vinylidene chloride/methyl acrylate copolymer (e.g., SARAN XU32019.10 available from Dow Corporation), vinylidene chloride/butyl acrylate copolymer, vinylidene chloride/styrene copolymer, vinylidene chloride/acrylonitrile copolymer, and vinylidene chloride/vinyl acetate copolymer.

Examples of useful VDC/VC include those sold under the trade name SOLVAY XVS709 having a weight-average molecular weight of 112,000, available from the Solvin Corporation; DOW™ 2032 having a weight-average molecular weight of 110,000, available from the Dow Chemical Company; and POVIDEN™ Type 2 VDC/VC having a weight-average molecular weight of 130,000, available from Kaustic of Volgograd, Russia.

Useful PVdC includes that having between 75 and 95 weight % vinylidene chloride monomer content. Useful PVdC includes that having from about 5 to about 25 weight %, from about 10 to about 22 weight %, and from about 15 to about 20 weight % comonomer content with the vinylidene chloride monomer. Useful PVdC includes that having a weight-average molecular weight (M_{w})of at least 80,000, such as at least 90,000, at least 100,000, at least 111,000, at least 120,000, at least 150,000, and at least 180,000; and between 80,000 and 180,000, such as between 90,000 and 170,000, between 100,000 and 160,000, between 111,000 and 150,000, and between 120,000 and 140,000. Useful PVdC also includes that having a viscosity-average molecular weight (M_{z}) of at least 130,000, such as at least 150,000, at least 170,000, at least 200,000, at least 250,000, and at least 300,000; and between 130,000 and 300,000, such as between 150,000 and 270,000, between 170,000 and 250,000, and between 190,000 and 240,000.

Useful compositions of the first layer 12 may include each of the following weight percentages of PVdC: at least about 50%, at least about 75%, at least about 80%, at least about 85%, at least about 88%, at least about 90%, at least about 93%, at least about 96%, and at least about 99%, based on the weight of the first layer. The first layer may consist essentially of PVdC, may consist of PVdC, and may comprise about 100% PVdC based on the weight of the first layer.

The first layer 12 may serve as a barrier layer, which is a layer having a primary function to reduce the transmission rate of one or more components -- for example, gases or vapors - through the film. Accordingly, the barrier layer of a film that is made into a package will help exclude one or more components from the interior of the package -- or conversely maintain one or more gases or vapors within the package.

The first layer 12 may have a thickness and composition sufficient to impart to the film an oxygen transmission rate of no more than any of the following 500, 150, 100, 50, 20, 15, and 10 cubic centimeters (at standard temperature and pressure) per square meter per day per 1 atmosphere of oxygen pressure differential measured at 0% relative humidity and 23°C. All references to oxygen transmission rate in this application are measured at these conditions according to ASTM D-3985, which is incorporated herein in its entirety by reference.

The first layer thickness may be at least about any of the following: 0.05 mils, 0.1 mils, 0.12 mils, 0.15 mils, and 0.2 mils; and at most about any of the following: 6 mils, 4 mils, 3 mils, and 2 mils. The first layer 12 may have a thickness relative to the thickness of the film 2, 4, 6, or 8 of at least about any of the following values: 5%, 10%, 15%, 20%, 30%, 40%, and 50%; and less than about any of the following values: 60%, 50%, 40%, 30%, 20%, and 10%.

### Second Layer

The second layer 14 may be directly adjacent to and directly adhered to the first layer 12 so as to function as a tie layer, namely, an inner or internal film layer having the primary purpose of improving the adherence of the first layer 12 of the film to another layer of the film. An "internal" or "inner" layer of a film has both surfaces of the layer directly adhered to another layer of the film. For example, the second layer 14 may be positioned between and directly adhered to both the first and third layers 12, 16 (Figs. 1-4) to enhance the inter-layer bond strength of the first layer to the third layer, relative to the inter-layer bond strength that would occur, for example, if the first and third film layers were directly adhered to each other (not shown). The second layer 14 may be directly adhered to an outer layer of the film. (Figs. 1-2) An outer layer of a film is one that has only one side directly adhered to another layer of the film. A layer that is "directly adhered" to another means that there is no intervening layer or adhesive layer between the layers.

Useful second layer thicknesses include those that range from about 0.25 to about 1.5 mil, about 0.25 to about 1 mil, about 0.25 to about 0.75 mil, about 0.5 to about 1 mil, and 0.5 to about 0.75 mil. The second layer 14 may have a thickness relative to the thickness of the film 2, 4, 6, or 8 of at least about any of the following values; 5%, 10%, 15%, 20%, 30%, 40%, and 50%; and less than about any of the following values: 60%, 50%, 40%, 30%, 20%, and 10%.

The second layer comprises a dispersion of nanoparticles dispersed in tie polymer. Useful compositions of the second layer 14 may include each of the following weight percentages of the nanoparticle/tie polymer dispersion: at least about 50%, at least about 75%, at least about 80%, at least about 85%, at least about 88%, at least about 90%, at least about 93%, at least about 96%, and at least about 99%, based on the weight of the second layer. The second layer may consist essentially of the nanoparticle/tie polymer dispersion, may consist of the nanoparticle/tie polymer dispersion, and may comprise about 100% the nanoparticle/tie polymer dispersion based on the weight of the second layer.

The tie polymer/nanoparticle dispersion and/or the second layer may have a melt index of less than about any of the following values: 10 g/10 minute, 8 g/10 minute, 6 g/10 minute, 5 g/10 minute, 4 g/10 minute, and 3 g/10 minute. All references to melt index values in this application are measured by ASTM D1238 (Condition 190/2.16), which is incorporated herein in its entirety by reference. It is believed that an effective amount of nanoparticles dispersed in the tie polymer lowers the melt index relative to that of the tie polymer taken alone; a lower melt flow index corresponds to an enhanced cohesive strength at elevated temperature.

### Tie Polymer

Useful tie polymers include thermoplastic polymers that are compatible with the polyolefin that may be present in the third layer 16, yet have polar characteristics sufficient to provide enhanced adhesion to PVdC of the first layer 12. Examples of tie polymers include;
1. Ethylene/vinyl acetate copolymer (EVA), for example, having a vinyl acetate content of at least about any of the following weight % amounts: 3%, 5%, 10%, 15%, 20%, 22%, 24%, and 25%; and for example at most about any of the following weight % amounts: 30%, 28%, 25%, 22%, 20%, 15%, and 10%. EVA also includes, for example, ethylene/vinyl acetate/carbon monoxide terpolymer, for example, having carbon monoxide content of at least about any of the following weight % amounts: 0.1%, 0.5%, 1%, 1.5%, and 2%; and for example at most about any of the following weight % amounts: 5%, 4%, 3%, 2%, and 1%, all based on the weight of the polymer.
2. Ethylene/(meth)acrylic acid copolymers (e.g., ethylene/acrylic acid polymer, ethylene/methacrylic acid copolymer), such as any of those described elsewhere in this Application, for example, an ethylene/acrylic acid available-from Dow Corporation under the PRIMACOR 1410 trademark;
3. Ethylene/C₁-C₁₂ alkyl (meth)acrylate copolymers (e.g., ethylene/methyl acrylate copolymer, ethylene/butyl acrylate copolymer, ethylene/methyl methacrylate copolymer), such as any of those described elsewhere in this Application, for example, ethylene/methyl acrylate copolymer having a methyl acrylate content of at least about 20 weight % (e.g., the resin available from the Eastman Chemical Company under the EMAC+SP1305 trademark), also for example, where the copolymer is a block copolymer comprising at least about 20 weight % (meth)acrylate monomer; and
4. Polymers modified (e.g., grafted) with unsaturated carboxylic acid anhydride (i.e., anhydride-modified polymer) to incorporate anhydride functionality, which promotes or enhances the adhesion characteristics of the polymer. Examples of unsaturated carboxylic acid anhydrides include maleic anhydride, fumaric anhydride, and unsaturated fused ring carboxylic acid anhydrides (e.g., as described in U.S. Patent 4,087,588, which is incorporated herein in its entirety by reference). Examples of anhydride-modified polymers include the anhydride-modified version of any of the polymers listed above in numbers 1-3 as well as any of the other polyolefins (e.g., ethylene homopolymer, ethylene/alpha-olefin copolymer, ethylene/unsaturated ester copolymer, and ethylene/(meth)acrylic acid copolymer) described in this Application, thus including anhydride-modified ethylene homo- and co-polymers and propylene homo- and copolymers.

Examples of anhydride-modified tie polymers also include: a) maleic anhydride-grafted linear low density polyethylene available from Rhom and Haas under the TYMOR 1228B trademark, b) maleic anhydride-grafted ethylene/vinyl acetate copolymer available from Dupont Corporation under the BYNEL 3861 trademark, c) ADMER resin (Mitsui Petrochemical Corp; Tokyo, Japan), d) PLEXAR 360 RESIN (Quantum Co.; Cincinnati, Ohio), and e) the LOTADER series of ethylene/alkyl acrylate/ maleic anhydride interpolymers (Elf-Atochem, Inc.; Buffalo, NY). Anhydride-modified polymer may be made by grafting or copolymerization, as is known in the art.

Useful anhydride-modified polymers may contain anhydride moiety in an amount (based on the weight of the modified polymer) of at least about any of the following: 0.1%, 0.5%, 1%, and 2%; and at most about any of the following: 10%, 7.5%, 5%, and 4%.

Useful compositions of the second layer may include the tie polymer in at least about any of the following weight percentages based on the weight of the second layer: 50%, 75%, 80%, 85%, 88%, 90%, 93%, 94, 95, 96, 97, 98, and 99%.

### Nanoparticles

"Nanoparticles" are particles having an average size of less than about 100 nm in at least one dimension. The nanoparticles may have an average aspect ratio (i.e., the ratio of the average largest dimension to the average smallest dimension of the particles) of from about 1 to about 30,000. For example, the aspect ratio for clay nanoparticles in the form of exfoliated platelets may be taken as the length (largest dimension) to the thickness (smallest dimension); whereas the aspect ratio for nanoparticles in a fiber configuration may be taken as the length (largest dimension) to the diameter (smallest dimension). Useful aspect ratios for nanoparticles also include at least about any of the following values, 1; 20; 25; 200; 250; 1,000; 2,000; 3,000; and 5,000; and at most about any of the following values: 25,000; 20,000; 15,000; 10,000; 5,000; 3,000; 2,000; 1,000; 250; 200; 25; and 20.

The nanoparticles may have an average size in the shortest dimension of at least about any of the following values: 0.5 nm, 0.8 nm, 1 nm, 2, nm, 3 nm, 4 nm, and 5 nm; and less than about any of the following values: 100 nm, 60 nm, 30 nm, 20 nm, 10 nm, 8 nm, 5 nm, and 3 nm, as estimated from TEM (transmission electron microscope) images. The nanoparticles may have an average dimension small enough - for example, smaller than a quarter wavelength of visible light - to maintain optical transparency of the film comprising the dispersed nanoparticles.

The amount of nanoparticle may be at least about any of the following values 0.5%, 1%, 1.5%, 2%, 2.5%, 3%, 4%, and 5 weight %; and may be less than about any of the following values: 20%, 15%, 10%, 8%, 6%, 5%, 4%, 3%, 2%, and 1 weight %, on a basis that may be selected from either the weight of the nanoparticle/tie polymer dispersion or the weight of the second layer.

A wide range of materials can, in principle, be synthesized or processed to form nanoparticles. The nanoparticles may be in the form of exfoliated platelets derived from layered silicates (phyllosilicates) such as clay, as discussed below. Clay minerals may be considered layered silicates by having, for example, a stacked structure of approximately 1 nm thick silicate sheets with a variable interlayer distance. Certain types of layered silicates may be easily separated into sheets with individual thickness of about 1 nanometer. The phyllosilicate may be naturally occurring, synthetically derived, and/or organically modified, as described below.

Useful materials from which the nanoparticles may be derived include:
1. Natural clays such as smectite clays, for example, bentonite clays (e.g., montmorillonite, hectorite, laponite) saponite, mica, vermiculite, bentonite, nontronite, beidellite, volkonskoite, and saponite;
2. Layered polysilicates (e.g., layered silicic acid), such as kanemite, makatite, ilerite, octosilicate, magadiite, and kenyaite;
3. Synthetic clays, such as, synthetic silicates, synthetic mica, synthetic saponite, and synthetic hectorite;
4. Modified clays such as fluorinated montmorillonite and fluorinated mica;
5. Layered phosphates;
6. Layered metal oxides;
7. Oxides such as silica, aluminum oxide, zinc oxide, and iron oxide;
8. Carbon-based materials such as graphite, single- and multi-walled nanotubes, and buckeyhorns; and
9. Carbonates, such as calcium carbonate.

Useful clays are available from various companies including Nanocor, Inc., Southern Clay Products, Kunimine Industries, Ltd., and Rheox.

### Third and Additional Layers

The third layer 16 may be directly adjacent to and directly adhered to the second layer 14, and as such, may be "tied" by the second layer 14 to the first layer 12. The third layer 16 may further function as any of a sealant (i.e., heat seal) layer, a core layer, a bulk layer, an abuse layer, or print side layer, as discussed below. The third layer may comprise one or more of any of the thermoplastic polymers described below in this Application.

For example, the third layer 16 may be an outer layer of the film. (Figs. 1-2.) The outer layer may be, for example, a sealant layer (e.g., heat-seal layer) of the film. The outer layer may be an "outside layer" of the film (i.e., an outer layer adapted or designed to face to the outside of a package incorporating the film) or an "inside layer" of the film (i.e., an outer layer adapted or designed to face the inside of a package incorporating the film).

The film may have, for example, a total of any of the following number of layers: from 3 to 20 layers, at least 3 layers, at least 4 layers, at least 5 layers, and from 5 to 9 layers. The term "layer" refers to a discrete film component which is coextensive with the film and has a substantially uniform composition. The film may include -- in addition to the first, second, and third layers 12, 14, 16 - the additional layer or layers 18 (Fig. 2), additional layer or layers 20 (Fig. 3), or both (Fig. 4). Additional layer(s) 18, 20 may comprise one or more of each of: i) an inside layer (e.g., a heat seal layer), ii) an outside layer (e.g., print side layer), iii) an abuse layer, and iv) a bulk or core layer.

Below are some examples of combinations in which the alphabetical symbols designate the film layers. Where the film representation below includes the same letter more than once, each occurrence of the letter may represent the same composition or a different composition within the class that performs a similar function.
A/B/C, A/B/E, A/B/D/C, A/B/D/E, C/B/A/B/C, C/B/A/B/E, C/B/A/B/D/E, C/D/B/A/B/E, C/D/B/A/B/D/E, C/B'/A/B/C, C/B'/A/B/E, C/B'/A/B/D/E, C/D/B'/A/B/E, C/D/B'/A/B/D/E, C/D/B/A/B/D/C, C/D/B'/A/B/D/C
"A" is a first layer 12 (i.e., PVdC barrier layer), as discussed above.
"B" is a second layer 14 (i.e., tie layer), as discussed above.
"B"' is a tie layer without dispersed nanoparticles; such tie layer may comprise any of the tie polymers discussed above.
"C" is a heat seal layer (i.e., sealant layer) as discussed below, that is, a layer adapted to facilitate the heat-sealing of the film to itself or to another object, such as a substrate, as is known in the art.
"D" is a core or bulk layer, as discussed below.
"E" is an outside (i.e., abuse or print side) layer, as discussed below.

### Sealant Layer "C"

The sealant layer may form the inside surface of the film. The sealant layer may facilitate the heat-sealing of the film to itself or to another object, such as a support member or tray. The sealant layer may include selected components having a melt or softening point lower than that of the components of the other layers of the film. The sealant layer may comprise a resin having a Vicat softening temperature of less than about any of the following values: 120°C, 115°C, 110°C, 105°C, 100°C, 95°C, and 90°C. The sealant layer may include one or more polymers having a melt-flow index of at least about any of the following: 1, 1.2, 1.4, 1.6, 1.8, 2, 2.2., 2.5, 2.8, 3, 3.5, 4, 5, 6, 7, 8, 9, 10, 15, and 20. The sealant layer may include one or more polymers having a melting point of less than about any of the following: 130°C, 125°C, 120°C, 115°C, 112°C, 110°C, 108°C, 105°C, 103°C, 100°C, 98°C, and 95°C, in an amount of at least about any of the following percentages (based on the weight of the sealant layer): 30, 40, 50, 60, 70, 80, 90, and 100,

All references to "Vicat" values in this application are measured according to ASTM 1525 (1kg). All references to melt-flow index in this application are measured according to ASTM D1238, at a temperature and piston weight as specified according to the material as set forth in the ASTM test method. All references to the melting point of a polymer or resin in this application refers to the melting peak temperature of the dominant melting phase of the polymer or resin as determined by differential scanning calorimetry according to ASTM D-3418.

- - The sealant layer may include one or more thermoplastic polymers, such as polyolefins, polystyrenes, polyurethanes, polyamides, polyesters, and ionomers.

Useful polyolefins include ethylene homo- and co-polymers and propylene homo- and co-polymers. Ethylene homopolymers include high density polyethylene ("HDPE") and low density polyethylene ("LDPE"). Ethylene copolymers include ethylene/alpha-olefin copolymers ("EAOs"), ethylene/unsaturated ester copolymers, and ethylene/(meth)acrylic acid copolymers. ("Copolymer" as used in this application means a polymer derived from two or more types of monomers, and includes terpolymers, etc.)

EAOs are copolymers of ethylene and one or more alpha-olefins, the copolymer having ethylene as the majority mole-percentage content. Preferably, the comonomer includes one or more C₃-C₂₀ α-olefins, more preferably one or more C₄-C₁₂ α-olefins, and most preferably one or more C₄-C₈ α-olefins. Particularly preferred α-olefins include 1-butene, 1-hexene, 1-octene, and mixtures thereof.

Useful EAOs include one or more of the following: 1) medium density polyethylene ("MDPE"), for example having a density of from 0.93 to 0.94 g/cm3; 2) linear medium density polyethylene ("LMDPE"), for example having a density of from 0.926 to 0.94 g/cm3; 3) linear low density polyethylene ("LLDPE"), for example having a density of from 0.915 to 0.930 g/cm3; 4) very-low or ultra-low density polyethylene ("VLDPE" and "ULDPE"), for example having density below 0.915 g/cm3, and 5) homogeneous EAOs. Useful EAOs include those having a density of less than about any of the following: 0.925, 0.922, 0.92, 0.917, 0.915, 0.912, 0.91, 0.907, 0.905, 0.903, 0.9, and 0.898 grams/cubic centimeter. Unless otherwise indicated, all densities herein are measured according to ASTM D 1505.

The polyethylene polymers may be either heterogeneous or homogeneous. As is known in the art, heterogeneous polymers have a relatively wide variation in molecular weight and composition distribution. Heterogeneous polymers may be prepared with, for example, conventional Ziegler Natta catalysts.

On the other hand, homogeneous polymers are typically prepared using metallocene or other single site-type catalysts. Such single-site catalysts typically have only one type of catalytic site, which is believed to be the basis for the homogeneity of the polymers resulting from the polymerization. Homogeneous polymers are structurally different from heterogeneous polymers in that homogeneous polymers exhibit a relatively even sequencing of comonomers within a chain, a mirroring of sequence distribution in all chains, and a similarity of length of all chains. As a result, homogeneous polymers have relatively narrow molecular weight and composition distributions. Examples of homogeneous polymers include the metallocene-catalyzed linear homogeneous ethylene/alpha-olefin copolymer resins available from the Exxon Chemical Company (Baytown, TX) under the EXACT trademark, linear homogeneous ethylene/alpha-olefin copolymer resins available from the Mitsui Petrochemical Corporation under the TAFMER trademark, and long-chain branched, metallocene-catalyzed homogeneous ethylene/alpha-olefin copolymer resins available from the Dow Chemical Company under the AFFINITY trademark.

Another useful ethylene copolymer is ethylene/unsaturated ester copolymer, which is the copolymer of ethylene and one or more unsaturated ester monomers. Useful unsaturated esters include: 1) vinyl esters of aliphatic carboxylic acids, where the esters have from 4 to 12 carbon atoms, and 2) alkyl esters of acrylic or methacrylic acid (collectively, "alkyl (meth)acrylate"), where the esters have from 4 to 12 carbon atoms.

Representative examples of the first ("vinyl ester") group of monomers include vinyl acetate, vinyl propionate, vinyl hexanoate, and vinyl 2-ethylhexanoate. The vinyl ester monomer may have from 4 to 8 carbon atoms, from 4 to 6 carbon atoms, from 4 to 5 carbon atoms, and preferably 4 carbon atoms.

Representative examples of the second ("alkyl (meth)acrylate") group of monomers include methyl acrylate, ethyl acrylate, isobutyl acrylate, n-butyl acrylate, hexyl acrylate, and 2-ethylhexyl acrylate, methyl methacrylate, ethyl methacrylate, isobutyl methacrylate, n-butyl methacrylate, hexyl methacrylate, and 2-ethylhexyl methacrylate. The alkyl (meth)acrylate monomer may have from 4 to 8 carbon atoms, from 4 to 6 carbon atoms, and preferably from 4 to 5 carbon atoms.

The unsaturated ester (i.e., vinyl ester or alkyl (meth)acrylate) comonomer content of the ethylene/unsaturated ester copolymer may be at least about any of the following weight %: 4%, 6%, 8%, 10%, and 12%, and at most about any of the following: 22%, 20%, 18%, 16%, 14%, 12%, 10%, and 8%, based on the weight of the copolymer. Useful ethylene contents of the ethylene/unsaturated ester copolymer include the following amounts: at least about 82 weight %, at least about 85 weight %, at least about 88 weight %, no greater than about 94 weight %, no greater than about 93 weight %, and no greater than about 92 weight %, based on the weight of the copolymer.

Representative examples of ethylene/unsaturated ester copolymers include ethylene/methyl acrylate, ethylene/methyl methacrylate, ethylene/ethyl acrylate, ethylene/ethyl methacrylate, ethylene/butyl acrylate, ethylene/2-ethylhexyl methacrylate, and ethylene/vinyl acetate.

Another useful ethylene copolymer is ethylene/(meth)acrylic acid, which is the copolymer of ethylene and acrylic acid, methacrylic acid, or both. The (meth)acrylic acid comonomer content of the ethylene/(meth)acrylic acid copolymer may be at least about any of the following weight %: 4%, 6%, 8%, 10%, and 12%, and at most about any of the following: 22%, 20%, 18%, 16%, 14%, 12%, 10%, and 8%, based on the weight of the copolymer.

Useful propylene copolymer includes propylene/ethylene copolymers ("EPC"), which are copolymers of propylene and ethylene having a majority weight % content of propylene, such as those having an ethylene comonomer content of less than 10%, preferably less than 6%, and more preferably from about 2% to 6% by weight.

Useful polyesters and polyamides include any of those described elsewhere in this application.

Ionomer is a copolymer of ethylene and an ethylenically unsaturated monocarboxylic acid having the carboxylic acid groups partially neutralized by a metal ion, such as sodium or zinc, preferably zinc. Useful ionomers include those in which sufficient metal ion is present to neutralize from about 15% to about 60% of the acid groups in the ionomer. The carboxylic acid is preferably "(meth)acrylic acid" - which means acrylic acid and/or methacrylic acid. Useful ionomers include those having at least 50 weight % and preferably at least 80 weight % ethylene units. Useful ionomers also include those having from 1 to 20 weight percent acid units. Useful ionomers are available, for example, from Dupont Corporation (Wilmington, DE) under the SURLYN trademark.

The sealant layer may have a composition such that any one of the above described polymers comprises at least about any of the following weight percent values: 30, 40, 45, 50, 55, 60, 65, 70, 75, 80, 85, 90, 95, and 100% by weight of the layer.

The thickness of the sealant layer is selected to provide sufficient material to effect a strong heat seal bond, yet not so thick so as to negatively affect the manufacture (i.e., extrusion) of the film by lowering the melt strength of the film to an unacceptable level. The sealant layer may have a thickness of at least about any of the following values: 0.2 mils, 0.25 mils, 0.3 mils, 0.35 mils, 0.4 mils, 0.45 mils, 0.5 mils, and 0.6 mils. The sealant layer may have a thickness ranging from about 0.05 to about 6 mils, more preferably from about 0.1 to about 2 mils, and still more preferably from about 0.2 to about 0.5 mils. Further, the thickness of the sealant layer as a percentage of the total thickness of the sealant film may be within any of the following ranges: from about 1 to about 50 percent, from about 5 to about 45 percent, from about 10 to about 45 percent, from about 15 to about 40 percent, from about 15 to about 35 percent, and from about 15 to about 30 percent. The sealant layer may have a thickness relative to the thickness of the film of at least about any of the following values: 15%, 20%, 30%, 40%, and 50%.

### Core or Bulk Layers "D"

The film may include one or more layers to serve as core or bulk layers. A core or bulk layer may be an inner film layer having a primary purpose other than as a barrier or tie layer - for example, serving to provide a multilayer film with a desired level of strength, modulus, or optics. A core or bulk layer may include one or more of the polymers and/or have a composition as described above in the section with respect to a sealant layer.

The film may include one or more layers comprising one or more polyesters and/or polyamides. Examples of useful polyesters include amorphous (co)polyesters, poly(ethylene/naphthalate), poly(ethylene/terephthalic acid), such as that with at least about 75 mole percent, or at least about 80 mole percent, of its mer units derived from terephthalic acid.

Examples of useful polyamides include poly(4-aminobutyric acid) ("nylon-4"), poly(6-aminohexanoic acid) ("nylon-6" or "poly(caprolactam)"), poly(7-aminoheptanoic acid) ("nylon-7"), poly(8-aminooctanoic acid) ("nylon-8"), poly(9-aminononanoic acid) ("nylon-9"), poly(10-aminodecanoic acid) ("nylon-10"), poly(11-aminoundecanoic acid) ("nylon-11"), and poly(12-aminododecanoic acid) ("nylon-12"), poly(hexamethylene adipamide) ("nylon-6,6"), poly(hexamethylene sebacamide) ("nylon-6,10"), poly(heptamethylene pimelamide) ("nylon-7,7"), poly(octamethylene suberamide) ("nylon-8,8"), poly(hexamethylene azelamide) ("nylon-6,9"), poly(nonamethylene azelamide) ("nylon-9,9"), poly(decamethylene azelamide) ("nylon-10,9"), poly(tetramethylenediamine-co-oxalic acid) ("nylon-4,2"), the polyamide of n-dodecanedioic acid and hexamethylenediamine ("nylon-6,12"), the polyamide of dodecamethylenediamine and n-dodecanedioic acid ("nylon-12,12"), poly(tetramethylenediamine-co-isophthalic acid) ("nylon-4,I"), polyhexamethylene isophthalamide ("nylon-6,I"), poly (2,2,2-trimethyl hexamethylene terephthalamide), poly(m-xylylene adipamide) ("nylon-MXD,6"), poly(p-xylylene adipamide), poly(hexamethylene terephthalamide), poly(dodecamethylene terephthalamide), and polyamide-MXD,I, and copolyamides based on a combination of the monomers used to make any of the foregoing polyamides, such as, nylon-4/6, nylon-6/6, nylon-6/9, caprolactam/hexamethylene adipamide copolymer ("nylon-6,6/6"), hexamethylene adipamide/caprolactam copolymer ("nylon-6/6,6"), trimethylene adipamide/hexamethylene azelaiamide copolymer ("nylon-trimethyl 6,2/6,2"), hexamethylene adipamide-hexamethylene-azelaiamide caprolactam copolymer ("nylon-6,6/6,9/6"), hexamethylene adipamide/hexamethylene-isophthalamide ("nylon-6,6/6,I"), hexamethylene adipamide/hexamethyleneterephthalamide ("nylon-6,6/6,T"), nylon-6,T/6,I, nylon-6/MXD,T/MXD,I, nylon-6,6/6,10, and nylon-6,I/6,T.

### Outside Layer "E"

The outside layer (i.e., abuse or print side layer) of the film may be exposed to environmental stresses once the film is formed into a package. Such environmental stresses include abrasion and other abuse during processing and shipment. The outside layer preferably also provides heat-resistant characteristics to the film to help prevent "burn-through" during heat sealing. This is because in forming a package by conductance heat sealing the film to itself, the heat seal layer may be placed in contact with itself, while the outside layer is proximate a heated jaw of a heat sealing apparatus. The heat seal jaw transfers heat through the outside layer to the heat seal layer of the package to soften the heat seal layer and form the heat seal.

Further, the outside layer of the film provides the surface upon which the processor typically applies a printed image (e.g., printed information), such as by printing ink. As such, the outside layer is preferably capable of providing a surface that is compatible with selected print ink systems.

The outside layer may include one or more polyesters, polyamides, polyethylenes, and/or polypropylenes (for example, any of the type described elsewhere in this application) either alone or in combination, for example, any one of these types of components in an amount of at least 50 weight %, more preferably at least 70%, still more preferably at least 90%, and most preferably 100% by weight of the layer. The outside layer may have any of the following thicknesses: from about 0.05 to about 5 mils, from about 0.3 to about 4 mils, and from about 0.5 to about 3.5 mils.

The abuse layer may include one or more of any of the following: polyolefins (e.g., polyethylenes, polypropylenes), polyamides, polyesters, polystyrenes, polyurethanes, and polycarbonates (for example, any of the type described elsewhere in this application). For example, the abuse layer may include any of these polymers in an amount of at least 50 weight %, more preferably at least 70%, still more preferably at least 90%, and most preferably 100% by weight of the layer.

The outside layer may have a thickness of from about 0,05 to about 5 mils, preferably from about 0.3 to about 4 mils, and more preferably from about 0.5 to about 3.5 mils. The thickness of the outside layer may range as a percentage of the total thickness of the barrier film from about (in ascending order of preference) 1 to 50 percent, 3 to 45 percent, 5 to 40 percent, 7 to 35 percent, and 7 to 30 percent. Useful thicknesses for the outside layer include at least about any of the following values: 0.05 mils, 0.1 mils, 0.15 mils, 0.2 mils, 0.25 mils, 0.3 mils, 0.35 mils, and 0.4 mils.

### Additives

The film and/or the first layer 12 may include additives commonly used with PVdC film compositions. For example, the first layer 12 may include amounts of plasticizer effective to enhance the processibility of the film to a desired amount, for example from 2 to 12 weight %, and from 4 to 10 weight %; but may also include less than each of the following amounts of plasticizer: 20%, 15%, 12%, 10%, 8%, 6%, and 4%, each based on the weight of the first layer. Preferably, the amount of plasticizer is only that amount needed to provide the desired enhancement of processibility so that the barrier attributes of the film are not further deteriorated.

Other useful additives include effective amounts of thermal stabilizer (e.g., a hydrogen chloride scavenger such as epoxidized soybean oil), lubricating processing aid (e.g., one or more acrylates), processing aids, slip agents, antiblock agents (e.g. silica), and pigments. For example, the film composition may include 0,1 to 0.5 weight % of a pigment, such as red pigment (e.g., VULCAN FAST RED B™ available from Clariant Corporation of Charlotte, North Carolina); and between 0.10 and 0.15 weight % of an antiblock agent, such as amorphous silica antiblock agent (e.g., SYLOBLOC™ 44 OR 47 available from Grace Davison of Baltimore, Maryland); and between 0.05 and 0.18 weight % of a wax antiblock/pigment dispersion aid, such as a fatty bisamide dispersion aid (e.g., KEMAMIDE W-20™ available from Witco Chemical, Humko Division of Memphis, Tennessee).

The amount of additives present in the film may be minimized in order that the barrier properties of the PVdC may be maintained or not deteriorated. The first layer 12 may be free of non-stick agents such as silicone agent.

One or more layers of the film may include one or more additives useful in packaging films, such as, antiblocking agents, slip agents, antifog agents, colorants, pigments, dyes, flavorants, antimicrobial agents, meat preservatives, antioxidants, fillers, radiation stabilizers, and antistatic agents. Such additives, and their effective amounts, are known in the art.

### Bond and Seal Strengths

The term "inter-layer bond strength" as used herein means the average maximum amount of force required to separate or delaminate two adjacent film layers either by adhesive failure between the layers or by cohesive failure through one of the two adjacent film layers (whichever occurs first), as measured in accordance with ASTM F88-00 where the testing machine (e.g., Instron tensile tester) crosshead speed is 5 inches per minute, using five, 1-inch wide, representative samples and a test temperature of room temperature (i.e., about 68°F), unless otherwise specified below. ASTM F88-00 is incorporated herein in its entirety by reference. To prepare a film sample for a test of the inter-layer bond strength between two specified layers, a portion of the film may be separated at the interface between the specified layers to provide specimen legs for insertion into the grips of the testing machine. For example, pressure-sensitive adhesive tape may be adhered to opposite outer sides of the film to leave a gripping tab of tape extending from each side of the film. The tabs may then be grasped and yanked in opposite directions to partially separate film layers.

As used herein, an "adhesive failure" is a failure in which the interfacial forces (e.g., valence forces or interlocking action or both) holding two surfaces together are overcome. A "cohesive failure" is one in which the molecular attractive forces holding together a layer composition are overcome.

The inter-layer bond strength between the first and second layers of the film may be at least about any of the following values; 0.5, 1, 2, 3, 4, 5, 6, 7, 8, 9, 10, 12, 14, 16, and 18 pounds/inch. The film may have any of these inter-layer bond strengths measured after the film has been exposed to liquid water at 100°C or 121°C (elevated pressure) for any of the following amounts of time: 10 minutes, 30 minutes, 1 hour, 2 hours, 3 hours, and 4 hours. The film may have any of these inter-layer bond strengths measured after the temperature of the film has reached an oven air temperature (and is in the oven for at least 1 minute at the oven air temperature) of any of the following values: 100°F, 140°F, 180°F, 200°F, 220°F, and 250°F. These elevated temperatures and conditions are meant to simulate those to which the film may be exposed during cook-in operations. Further, the film may have any of these inter-layer bond strengths both after exposure to any of the exposure time/conditions and measured under any of the oven conditions described in this paragraph.

The term "film seal strength" as used herein refers to the maximum amount of force required to cause: 1) a cohesive or adhesive failure either within the film that is sealed to itself or to another substrate (e.g., a support member as discussed below) or 2) an adhesive failure in either the bond between the film portions that are sealed together or the bond between the film and the substrate to which the film is sealed, whichever occurs first, measured according to ASTM F88-00 where the Instron tensile tester crosshead speed is 10 inches per minute, using five, 1-inch wide, representative samples and a test temperature of room temperature (i.e., about 68°F), unless otherwise specified below.

The film samples for the "film seal strength" test may be prepared by heat sealing representative samples of the film together in fin seal arrangement with the sealant layers facing each other. A sealant layer is a layer of the film that is adapted or designed to facilitate the heat-sealing of the film to itself or another object, as is known in the art.

The conditions used to form the heat seal may be recorded, such as, the type of heat sealer (e.g., impulse heat sealer and bar heat sealer), the manufacturer of the sealing equipment (e.g., Vertrod Corporation), the jaw pressure, and the duration and temperature of the heat cycle and cooling periods. For example, for a hot bar sealer, the sealing conditions may be an 1/8-inch wide sealing bar at a temperature selected from 290°F and 300°F, a dwell time of 0.5 seconds, and a sealing pressure of 40 psig. For example, for an impulse sealer, the setting for the maximum temperature during the heating cycle may be any of 180, 190, 200, and 210°C; the heating cycle dwell time may be selected from 1 or 2 seconds; the cooling period may be selected from 3, 4, 5, 6, 7, or 8 seconds; and a seal pressure may be selected from any of 20, 40, 60, 80, 90, 95, and 100 psig.

The film seal strength may be at least about any of the following values; 3, 3.5, 4, 4.5, 5, 5.5., 6, 6.5, 7, 7.5, 8, 9, 10, 12, 14, 16, and 18 pounds/inch (lbf/in). The film may have any of these film seal strengths measured after the heat-sealed film has been exposed to liquid-water at 100°C or 121°C (elevated pressure) for any of the following amounts of time: 10 minutes, 30 minutes, 1 hour, 2 hours, 3 hours, and 4 hours. The film may have any of these film seal strengths measured while the temperature of the sealed film has reached a conventional oven air temperature (and has been in the oven for at least 1 minute at the oven air temperature) of any of the following values: 100°F, 140°F, 180°F, 200°F, 220°F, and 250°F. These elevated temperatures and conditions are meant to simulate those to which the sealed film may be exposed during cook-in operations. Further, the film may have any of these seal strengths both after exposure to any of the exposure time/conditions and measured under any of the oven conditions described in this paragraph.

### Thickness of the Film

The term "film" as used herein refers to plastic web material having a thickness of 20 mils or less, such as 10 mils or less. The film of the present invention may have any total thickness as long as it provides the desired properties (e.g., flexibility, Young's modulus, optics, seal strength) for the particular packaging application of expected use (e.g., retort packaging, cook-in packaging).

Useful thicknesses for the film include less than about each of the following: 15 mils, 12 mils, 10 mils, 5 mils, 4 mils, 3 mils, and 2 mils. (A "mil" is equal to 0.001 inch.) Useful thicknesses for the film also include from at least about each of the following: 0.3 mils, 0.5 mils, 0.6 mils, 0.75 mils, 0.8 mils, 0.9 mils, 1 mil, 1.2 mil, 1.4 mil, and 1,5 mil. Useful ranges for the film thickness include from about 0.5 to about 10 mils, from about 0.5 to about 7 mils, and from about 0.5 to about 5 mils.

### Modulus of the Film

The film preferably exhibits a Young's modulus sufficient to withstand the expected handling and use conditions. Young's modulus may be measured in accordance with one or more of the following ASTM procedures: D882; D5026-95a; D4065-89, each of which is incorporated herein in its entirety by reference. The film may have a Young's modulus of at least about any of the following: 70,000, 80,000, 90,000, 100,000, 150,000, 200,000, 250,000, 300,000, 350,000 pounds/square inch, measured at a temperature of 73°F. Useful ranges for Young's modulus for the film include from about 70 to about 2000 MPa, from about 100 to about 1000 MPa, and from about 100 to about 500 MPa, measured at a temperature of 100°C.

### Appearance Characteristics of the Film

The film 12 may have low haze characteristics. Haze is a measurement of the transmitted light scattered more than 2.5° from the axis of the incident light. Haze is measured against the outside layer of the film. As previously discussed, the "outside layer" is the outer layer of the film that will be adjacent the area outside of the package comprising the film. Haze is measured according to the method of ASTM D 1003, which is incorporated herein in its entirety by reference. All references to "haze" values in this application are by this standard. The haze of the film may be no more than about any of the following values: 30%, 25%, 20%, 15%, 10%, 8%, 5%, and 3%.

The film may have a gloss, as measured against the outside layer of at least about any of the following values: 40%, 50%, 60%, 63%, 65%, 70%, 75%, 80%, 85%, 90%, and 95%. These percentages represent the ratio of light reflected from the sample to the original amount of light striking the sample at the designated angle. All references to "gloss" values in this application are in accordance with ASTM D 2457 (60° angle), which is incorporated herein in its entirety by reference.

The film may be transparent (at least in the non-printed regions) so that a packaged article may be visible through the film. "Transparent" means that the film transmits incident light with negligible scattering and little absorption, enabling objects (e.g., the packaged article or print) to be seen clearly through the film under typical viewing conditions (i.e., the expected use conditions of the material). The transparency (i.e., clarity) of the film may be at least about any of the following values: 65%, 70%, 75%, 80%, 85%, and 90%, as measured in accordance with ASTM D1746.

The measurement of optical properties of plastic films, including the measurement of total transmission, haze, clarity, and gloss, is discussed in detail in Pike, LeRoy, "Optical Properties of Packaging Materials," Journal of Plastic Film & Sheeting, vol. 9, no. 3, pp. 173-80 (July 1993), of which pages 173-80 is incorporated herein by reference.

### Film Orientation

The film may be non-oriented. Alternatively, the film may be oriented in either the machine (i.e., longitudinal), the transverse direction, or in both directions (i.e., biaxially oriented), in order to reduce the permeability and/or to enhance the strength, optics, and durability of the film. The film may be oriented in at least one direction by any of the following ratios: at least 2.5:1, from about 2.7:1 to about 10:1, at least 2.8:1, at least 2.9:1, at least 3.0:1, at least 3.1:1, at least 3.2:1, at least 3.3:1, at least 3.4:1, at least 3.5:1, at least 3.6:1, and at least 3.7:1.

The film may be non-heat shrinkable - for example, having a total free shrink at 185°F (85°C) of less than about any of the following: 3%, 1%, and 0,5%. Alternatively, the film may be heat shrinkable, for example having a total free shrink at 185°F (85°C) of at least about any of the following: 5%, 10%, 15%, 40%, 50%, 55%, 60%, and 65%. The total free shrink at 185°F (85°C) may also range from any of the following: 40 to 150%, 50 to 140%, and 60 to 130%. The total free shrink is determined by summing the percent free shrink in the machine (longitudinal) direction with the percentage of free shrink in the transverse direction. For example, a film which exhibits 50% free shrink in the transverse direction and 40% free shrink in the machine direction has a total free shrink of 90%. The film need not have shrinkage in both directions. The free shrink of the film is determined by measuring the percent dimensional change in a 10 cm x 10 cm film specimen when subjected to selected heat (i.e., at a certain temperature exposure) according to ASTM D 2732, which is incorporated herein in its entirety by reference.

- As is known in the art, a heat-shrinkable film shrinks upon the application of heat while the film is in an unrestrained state. If the film is restrained from shrinking -- for example by a packaged good around which the film shrinks -- then the tension of the heat-shrinkable film increases upon the application of heat. Accordingly, a heat-shrinkable film that has been exposed to heat so that at least a portion of the film is either reduced in size (unrestrained) or under increased tension (restrained) is considered a heat-shrunk (i.e., heat-contracted) film.

The film may exhibit a shrink tension in at least one direction of any of the following: at least 100 psi (689,6 kN/m2), 175 psi (1206.8 kN/m2), from about 175 to about 500 psi (1206.8 to 3448.0 kN/m2), from about 200 to about 500 psi (1379.2 to 3448.0 kN/m2), from about 225 to about 500 psi (1551.6 to 3448.0 kN/m2), from about 250 to about 500 psi (1724.0 to 3448.0 kN/m2), from about 275 to about 500 psi (1896.4 to 3448.0 kN/m2), from about 300 to about 500 psi (2068.8 to 3448.0 kN/m2), and from about 325 to about 500 psi (2241.2 to 3448.0 kN/m2). Shrink tension is measured at 185°F (85°C) in accordance with ASTM D 2838, which is incorporated herein in its entirety by reference. The shrink tension of the film should be low enough for a given end use and film construction so as not to induce an undesired or premature seal failure or delamination.

The film may be annealed or heat-set to reduce the free shrink either slightly, substantially, or completely; or the film may not be heat set or annealed once stretched in order that the film will have a high level of heat shrinkability.

### Manufacturing the Film

The film may be manufactured by thermoplastic film-forming processes known in the art. The film may be prepared by extrusion or coextrusion utilizing, for example, a tubular trapped bubble film process or a flat film (i.e., cast film or slit die) process. The film may also be prepared by extrusion coating. Alternatively, the film may be prepared by adhesively or extrusion laminating the various layers. These processes are known to those of skill in the art. A combination of these processes may also be employed.

For example, in the reference above to film representations having alphabetical symbols designating film layers, such as a film represented by C/D/B/A/B/D/C, the single slash may indicate a coextusion interface. Also by way of example, any or all of the single slashes may be substituted with a double slash ("//") to indicate an extrusion coated interface, for example, C/D/B//A/B/D/C, in which case by example, the first layers C, D, and B may be coextruded to form a substrate, followed by extrusion coating of subsequent layers A, B, D, and C onto the substrate. The A, B, and C layered substrate may be exposed to irradiation to effect cross-linking as discussed below, while the subsequent extrusion coated layers may or may not be crosslinked by irradiation.

In forming the resin mixture that comprises the second layer 14, the nanoparticle component may be mixed in the tie polymer component before the resin mixture is heated or melted for processing to form the film. This may help to disperse nanoparticles in the tie polymer. Once mixed, the blend can be extruded and processed as discussed above. The nanoparticles may be essentially uniformly dispersed in the tie polymer of the second layer.

### Making the Nanoparticles

A clay mineral is a good nanoparticle precursor because the clay comprises silicate layers in which the fundamental unit may be about a 1 nm thick planar structure. Clay undergoes intercalation with various organic molecules. The intercalation causes an increase in the distance between silicate layers - the increase depending on the molecular size and structure of the intercalated organic molecule.

Many treatments used to modify the clay for the purpose of improving the dispersion of clay particles in a polymer are known - for example, methods of modifying clays with organic cations -- and may be used in the practice of this invention. The clay treatments may be conducted prior to or during mixing the clay material with the polymer. Clay treatment methods are summarized in Pinnavaia and Beall, Polymer-Clay Nanocomposites, p.174-82 (Wiley & Sons 2000), which is incorporated herein in its entirety by reference.

One method of forming clay or layered silicate nanoparticles is the polymer-melt intercalation method. In a first step, a clay or layered silicate may be "treated" (i.e., modified, as discussed below) to render the normally hydrophilic clay or silicate organophilic, and thus a "modified clay." The modified clay may be further treated, as also discussed below. The modified and optionally further treated clay is then mixed with a melted polymer under high shear to induce the clay lamella to exfoliate (separate and disperse) in the polymer matrix to form dispersed exfoliated clay nanoparticles.

In another method of forming clay nanoparticles -- the monomer intercalation method - relatively large clay particles are dispersed in monomer so that the clay is intercalated with the monomer. The monomer is then polymerized. The polymerized intercalated monomer expands the interlayer distance of the clay, resulting in exfoliated nanoparticles of clay that are dispersed in a polymer matrix.

Delaminated or exfoliated clay nanoparticles result when the individual silicate layers are no longer close enough to interact with gallery cations of the adjacent layers. The clay nanoparticles (e.g., single clay platelets) may be considered dispersed in a polymer when the clay interlayer spacing is the order of, or greater than, the radius of gyration of the polymer. Thus, exfoliated or delaminated clay has lost its registry and is relatively uniformly and randomly dispersed in a continuous polymer matrix. The platelet clay particles may be exfoliated in the matrix polymer such that at least about any of the following amounts of the platelet particles are dispersed in the form of nanoparticle platelets: 50%, 60%, 70%. 80%, 90%, and 95%, based on an estimate of the number of particles using TEM images.

### Modifying the Clay

The modification of the clay may be accomplished by ion exchange of the alkali metal or alkaline earth metal ions present in the clay with a swelling agent, such as a "functionalized" oligomer or polymer, ammonium salts, organic cations such as alkyl ammonium (e.g., octadecylammonium) silicates, long-chain quaternary ammonium, organometallic compounds, or suitably functionalized organosilanes. For example, sodium cations in the interlayer space of montmorillonite may be exchanged with organic cations to yield organophilic montomorillonite.

This intercalation modification increases the interlayer spacing between adjacent silicate layers may disrupt the tactoid structure of the layered silicate, enhance the dispersibility of the modified clay in a polymer matrix, and swell the clay to permit further intercalation.

A "functionalized" oligomer or polymer is one that contains a functional group that provides for increased intercalation of a selected clay. The functional group of the functionalized oligomer or polymer may be an onium group (e.g., an ammonium group), a cationic salt group (e.g., quaternary ammonium, phosphonium, pyridinium), or a cationic amine salt group. The functional group may be positioned at or near the chain end of the functionalized polymer or oligomer. One or more functional groups may be present on the functionalized polymer or oligomer.

Methods to modify layered particles with organic cations are known, any of these may be useful; see for example WO 01/10948, which is incorporated herein in its entirety by reference.

Useful cations include alkyl ammonium ions, such as tetramethyl ammonium, hexyl ammonium, butyl ammonium, bis(2-hydroxyethyl) dimethyl ammonium, hexyl benzyl dimethyl ammonium, benzyl trimethyl ammonium, butyl benzyl dimethyl ammonium, tetrabutyl ammonium, di(2-hydroxyethyl) ammonium, and the like, and alkyl phosphonium ions such as tetrabutyl phosphonium, trioctyl octadecyl phosphonium, tetraoctyl phosphonium, octadecyl triphenyl phosphonium, and mixtures thereof.

Other particularly useful organic cations include alkyl ammonium ions such as dodecyl ammonium, octadecyl trimethyl ammonium, bis(2-hydroxyethyl) octadecyl methyl ammonium, octadecyl benzyl dimethyl ammnonium, and mixtures thereof.

Useful polyalkoxylated ammonium compounds include the hydrochloride salts of polyalkoxylated amines such as JEFFAMINE (of Huntsman Chemical), namely, JEFFAMINE-506 and JEFFAMINE 505, and an amine available under the trade name ETHOMEEN (of Akzo Chemie America), namely, ETHOMEEN 18/25, which is octadecyl bis(polyoxyethylene[15])amine, wherein the numbers in brackets refer to the total number of ethylene oxide units, A further illustrative example of a suitable polyalkoxylated ammonium compound is ETHOQUAD 18/25 (of Akzo Chemie America), which is octadecyl methyl bis(polyoxyethylene[15]) ammonium chloride, wherein the numbers in brackets refer to the total number of ethylene oxide units.

### Further Treatment of the Modified Clay

The modified clay may be further treated to aid dispersion and exfoliation in the matrix polymer and/or improve the strength of the polymer/clay interface. For example, the modified clay may be further intercalated with a compatibilizer, such as a polyolefin oligomer having polar groups. An example is maleic anhydride modified olefin oligomer.

Useful treatments may also include intercalation with water-soluble or water-insoluble polymers, organic reagents or monomers, silane compounds, metals or organometallics, and/or their combinations.

Examples of useful pretreatment with polymers and oligomers include those disclosed in U.S. Pat. Nos. 5,552,469 and 5,578,672, each of which is incorporated herein in its entirety by reference. Examples of useful polymers for treating the clay material include polyvinyl pyrrolidone, polyvinyl alcohol, polyethylene glycol, polytetrahydrofuran, polystyrene, polycaprolactone, certain water-dispersible polyesters, and Nylon-6.

Examples of useful pretreatment with organic reagents and monomers include those disclosed in EP 780,340 Al, incorporated herein by reference. Examples of useful organic reagents and monomers for intercalating the swellable layered clay include dodecylpyrrolidone, caprolactone, caprolactam, ethylene carbonate, ethylene glycol, bishydroxyethyl terephthalate, dimethyl terephthalate, and mixtures thereof.

Examples of useful pretreatment with silane compounds include those treatments disclosed in WO 93/11190, incorporated herein by reference. Examples of useful silane compounds includes (3-glycidoxypropyl)trimethoxysilane, 2-methoxy(polyethyleneoxy)propyl heptamethyl trisiloxane, octadecyl dimethyl (3-trimethoxysilylpropyl) ammonium chloride and the like.

A dispersing aid may be used to aid exfoliation of the treated or untreated swellable layered particles into the polymer. Many such dispersing aids are known and cover a wide range of materials including water, alcohols, ketones, aldehydes, chlorinated solvents, hydrocarbon solvents, aromatic solvents, and combinations thereof

The modified clays may be treated with a surfactant to enhance compatibility with the matrix polymer. Examples include di-methyl, di-tallow modified montmorillonite (available from Southern Clay Products under the Cloisite 20A trademark) and octadecylamine/organosilane modified montmorillonite clay (available from Nanocor under the Namoer 1.31PS trademark).

Before effecting exfoliation, the size of the clay particles may be reduced by methods known in the art, including, but not limited to, grinding, pulverizing, hammer milling, jet milling, and their combinations. The average particle diameter may be reduced to less than 100 microns, less than 50 microns, and less than 20 microns.

### Optional Energy Treatment

One or more of the thermoplastic layers of the film -- or at least a portion of the entire film -- may be cross-linked to improve the strength of the film, improve the orientation of the film, and help to avoid burn through during heat seal operations. Cross-linking may be achieved by using chemical additives or by subjecting one or more film layers to one or more energetic radiation treatments -- such as ultraviolet, X-ray, gamma ray, beta ray, and high energy electron beam treatment -- to induce cross-linking between molecules of the irradiated material. Useful radiation dosages include at least about any of the following; 5, 7, 10, 15, 20, 25, 30, 35, 40, 45, and 50 kGy (kiloGrey). Useful radiation dosages include less than about any of the following: 130, 120, 110, 100, 90, 80, and 70 kGy. Useful radiation dosages include any of the following ranges: from 5 to 150, from 10 to 130, from 5 to 100, and from 5 to 75 kGy.

It may be desirable to avoid irradiating a PVdC-containing layer. To that end, substrate layers may be extruded and irradiated, and the PVdC-containing layer 12 (and subsequent layers) may then be applied to the irradiated substrate, for example, by an extrusion coating process. The film may have any of the inter-layer bond strengths and film seal strengths discussed above (under any of the test conditions/exposures discussed above) if the layer 14 is not crosslinked (i.e., irradiated) or if the layer 14 is crosslinked (i.e., irradiated to effect crosslinking). If more than one layer 14 is present, for example, a layer 14 on either side of layer 12, then one, both or neither of the layers 14 may be crosslinked; and the film may have any of the inter-layer bond strengths and film seal strengths discussed above (under any of the test conditions/exposures discussed above).

All or a portion of one or two surfaces the film may be corona and/or plasma treated to change the surface energy of the film, for example, to increase the ability of print or a food product to adhere to the film. One type of oxidative surface treatment involves bringing the sealant film into the proximity of an O₂- or N₂-containing gas (e.g., ambient air) which has been ionized. Exemplary techniques are described in, for example, U.S. Patent Nos. 4,120,716 (Bonet) and 4,879,430 (Hoffman), which are incorporated herein in their entirety by reference. The sealant film may be treated to have a surface energy of at least about 0.034 J/m², preferably at least about 0.036 J/m², more preferably at least about 0.038 J/m², and most preferably at least about 0.040 J/m².

### Use of the Film

The film of the present invention may be formed into a package (e.g., bag or casing) for packaging (e.g., enclosing) an object such as a food product (e.g., ground or processed meat products, fresh red meat products, and more specifically, meats such as poultry, pork, beef, sausage, lamb, goat, horse, and fish).

The package may be formed by sealing the film to itself, or by sealing the film to a support member, which supports the product (e.g., a food product) that may be disposed on or in the support member. Seals may be made by adhesive or heat sealing, such as bar, impulse, radio frequency ("RF") or dielectric sealing, Suitable package configurations include end-seal bag, side-seal bag, L-seal bag, pouch, and seamed casing (e.g., back-seamed tubes by forming an overlap or fin-type seal). Such configurations are known to those of skill in the art.

The support member may comprise, for example, a thermoformed web comprising a thermoplastic. Also for example, a meat product may be disposed in or on a tray-like support member comprising, for example, expanded polystyrene sheet material that has been thermoformed into a desired shape for supporting the meat product. In such arrangement, the film may be considered a "lid," as is known in the art. The support member may be substantially rigid, semi-rigid, or flexible. For example, the support member may have a 1% secant flex modulus of at least about any of the following values: 120,000, 140,000, 160,000, 180,000, 200,000, and 225,000 pounds/square inch. Useful support members (e.g., trays and formed webs) are known to those of skill in the art; see, for example, U.S. Patent Publication 2002/0197425 A1 published December 26, 2002 and U.S. Patents 5,348,752 and 5,439,132, each of which are incorporated herein in its entirety by reference.

For example, once the film has been placed in a tube or casing configuration, one end of the tube may be closed by tying, clipping (e.g., metal clips), or sealing. The tube may then be filled through the remaining open end with an uncooked food product (e.g., a sausage emulsion or another flowable meat product). The remaining open end is then closed by tying, clipping, or sealing to form a package enclosing a food product. This filling procedure may take place, for example, by vertical form-fill-seal or horizontal form-fill-seal processes known to those of skill in the art.

The packaged food product enclosed within the package comprising the film may be processed (e.g., cooked, retorted, or pasteurized) for example, by immersion in a liquid hot water bath, exposure to steam, or exposure to hot air, for an effective amount of time and at an effective temperature and pressure, which include any of the conditions discussed in the Background section. This exposure may also shrink the package tightly about the enclosed food product by heat shrinking the film.

After the food product has been processed (e.g., cooked or retorted) to a desired level, the packaged food may be sold in the packaged form, or the package may be stripped from the cooked food so the food may be processed further. Also, the cooked packaged food may be thinly sliced while encased.

The above descriptions are those of preferred embodiments of the invention. Various alterations and changes can be made without departing from the spirit and broader aspects of the invention as defined in the claims, which are to be interpreted in accordance with the principles of patent law, including the doctrine of equivalents. Except in the claims and the specific examples, or where otherwise expressly indicated, all numerical quantities in this description indicating amounts of material, reaction conditions, use conditions, molecular weights, and/or number of carbon atoms, and the like, are to be understood as modified by the word "about" in describing the broadest scope of the invention. Any reference to an item in the disclosure or to an element in the claim in the singular using the articles "a," "an," "the," or "said" is not to be construed as limiting the item or element to the singular unless expressly so stated. All references to ASTM tests are to the most recent, currently approved, and published version of the ASTM test identified, as of the priority filing date of this application. Each such published ASTM test method is incorporated herein in its entirety by this reference.

## Claims

1. A film comprising:
a first layer comprising at least about 50 weight % vinylidene chloride polymer based on the weight of the first layer;
a second layer comprising:
i) at least about 50 weight % of one or more tie polymers selected from ethylene/vinyl acetate copolymer, ethylene(meth)acrylic acid copolymer, ethylene/C₁- C₁₂ alkyl (meth)acrylate copolymer, and anhydride-modified polyolefin, based on the weight of the second layer; and
ii) at least about 0.5 weight % of nanoparticles dispersed in the one or more tie polymers of the second layer based on the weight of the second layer, the nanoparticles having an average size of less than about 100 nm in at least one dimension; and
a third layer comprising one or more thermoplastic polymers, wherein the second layer is between and directly adhered to both the first and third layers.

2. A film according to claim 1 wherein the second layer comprises nanoparticles having an average size in the shortest dimension of less than about 30 nm.

3. A film according to claim 2 wherein the second layer comprises, as nanoparticles, exfoliated platelets derived from layered silicates, or exfoliated platelets derived from modified clay.

4. A film according to any one of the preceding claims, wherein the second layer comprises less than about 20 weight % of nanoparticles, based on the weight of the second layer.

5. A film according to any one of the preceding claims wherein the one or more tie polymers of the second layer comprises anhydride-modified polymer.

6. A film according to claim 5, wherein the one or more tie polymers of the second layer comprise anhydride-modified ethylene/vinyl acetate copolymer or anhydride-modified ethylene/C₁-C₁₂ alkyl (meth)acrylate copolymer.

7. A film according to any one of the preceding claims wherein the one or more tie polymers of the second layer comprise ethylene/vinyl acetate copolymer having a vinyl acetate content of at least about 25 weight %.

8. A film according to any one of the preceding claims wherein the second layer comprises at least about 90% of the one or more tie polymers, based on the weight of the second layer.

9. A film according to any one of the preceding claims wherein the one or more tie polymers of the second layer comprise crosslinked tie polymer.

10. A film according to any one of claims 1 to 8, wherein the second layer is essentially free of crosslinked tie polymer.

11. A film according to any one of the preceding claims wherein the vinylidene chloride polymer comprises from about 5% to about 25% of comonomer content chosen from vinyl chloride, methyl acrylate and vinyl acetate and from about 75% to about 95% of vinylidene chloride monomer content, based on the weight of the copolymer.

12. A film according to any one of the preceding claims wherein the first layer comprises at least about 80% vinylidene chloride polymer by weight of the first layer.

13. A film according to any one of the preceding claims wherein the third layer is an outer layer of the film.

14. A film according to any one of claims 1 to 12 wherein the third layer is an inner, interior layer of the film.

15. A film according to any one of the preceding claims further comprising:
a fourth layer comprising:
i) at least about 50 weight % of one or more tie polymer selected from ethylene/vinyl acetate copolymer, ethylene(meth)acrylic acid copolymer, ethylene/C₁-C₁₂ alkyl (meth)acrylate copolymer, and anhydride-modified polyolefin, based on the weight of the fourth layer; and
ii) at least about 0.5 weight % of nanoparticles dispersed in the one or more tie polymers of the fourth layer based on the weight of the fourth layer, the nanoparticles of the fourth layer having an average size of less than about 100 nm in at least one dimension, based on the weight of the fourth layer; and
a fifth layer comprising one or more thermoplastic polymers, wherein the fourth layer is between and directly adhered to both the first and fifth layers.

16. A film according to any one of the preceding claims wherein the minimum of the inter-layer bond strengths between the first and second layers and between the second and third layers is at least about 700 N/m (4 pounds/inch).

17. A film according to any one of the preceding claims wherein the minimum of the inter-layer bond strengths between the first and second layers and between the second and third layers is at least about 350 N/m (2 pounds/inch) measured after exposing the film to liquid water at 100°C for 1 hour, or wherein the minimum of the inter-layer bond strengths between the first and second layers and between the second and third layers is at least about 350 N/m (2 pounds/inch) measured at 38°C (100°F).

18. A film according to any one of the preceding claims which is transparent.

19. A film according to any one of the preceding claims wherein the second layer has a melt index of less than 10 g/10 minutes.

20. A packaged object comprising:
an object; and
a package comprising a film of any one of the preceding claims, wherein the package encloses the object.

21. A packaged object according to claim 20 wherein the object comprises a food product.

22. A packaged object according to claim 20 or 21 wherein the package comprises the film heat sealed to a support member in one or more selected areas to form at least one heat sealed portion.

23. A packaged object according to claim 20 or 21 wherein the package comprises the film heat sealed to itself in one or more selected areas to form at least one heat sealed portion.

24. A packaged object according to claim 22 or 23 wherein the film of the at least one heat sealed portion has a film seal strength of at least about 525 N/m (3lbf/in) measured after exposing the heat sealed portion to liquid water at 100°C for 30 minutes or wherein the film of the at least one heat sealed portion has a film seal strength of at least about 525 N/m (3 lbf/in) measured while the film is at 38°C (100°F).

25. A method of processing a packaged food product comprising heating a packaged food product according to any one of claims 21 to 24 to a temperature of at least about 55°C for at least about 1 hour.

26. A method according to claim 25 which comprises heating the packaged food product to a temperature of at least about 120°C for at least about 10 minutes.

27. A method according to claim 25 or 26 wherein the heating comprises immersing the packaged food product in liquid water.
